# EUROPEAN PATENT SPECIFICATION

(11) **EP 3 830 840 B1**
(45) Date of publication and mention of the grant of the patent: **07.09.2022**
(21) Application number: 18748915.8
(22) Date of filing: 31.07.2018
(51) Int. Cl.: G21G 1/02, G21C 17/108

(54) **LANCE UNIT AND METHOD OF PRODUCING RADIONUCLIDES**
LANZENEINHEIT UND VERFAHREN ZUR HERSTELLUNG VON RADIONUKLIDEN
UNITÉ LANCE ET PROCÉDÉ DE PRODUCTION DE RADIONUCLÉIDES

(43) Date of publication of application: 09.06.2021
(73) Proprietor: Framatome GmbH, 91052 Erlangen (DE)
(72) Inventor: RICHTER, Thomas Fabian, 91080 Marloffstein (DE); WAGNER, Sebastian, 91058 Erlangen (DE)
(74) Representative: Lavoix
(86) International application number: PCT/EP2018/070775
(87) International publication number: WO 2020/025115

(56) References cited:
- WO-A1-2015/158523
- US-A- 4 708 844
- US-A- 5 956 380

## Description

### FIELD OF THE INVENTION

The invention is directed to an independent nuclide activation system (NAS) within a nuclear reactor such as an European Pressurized Water Reactor (EPR).

Furthermore, the invention is directed to a nuclide activation and nuclear monitoring system for usage in a nuclear reactor core as well as a method of producing radionuclides from irradiation targets in a nuclear reactor by using a tube system of a commercial nuclear reactor.

### TECHNICAL BACKGROUND

The production of nuclides in nuclear reactors is known in the state of the art. So far, existing instrumentation tubes of a nuclear monitoring system, for instance a so-called Aeroball Measuring System (AMS) or a so-called Traversing Incore Probe (TIP) System, are used for accommodating the targets to be irradiated. The instrumentation tubes are also called monitoring tubes. For implementing a Nuclide Activation System (NAS), the respective instrumentation tubes of the nuclear monitoring system are converted into irradiation tubes which are also called nuclide activation tubes. Thus, the instrumentation tubes converted cannot be used for monitoring the nuclear reactor core during the implementation of the Nuclide Activation System so that the monitoring of the nuclear reactor core is limited when the Nuclide Activation System is used. A prior art in-core flux detector assembly is known from patent document US 4,708,844 A.

However, the existing instrumentation tubes do not end at the optimal core positions with regard to neutron flux within the nuclear reactor core as the instrumentation tubes cover the entire core length for monitoring purposes, in particular they reach to the lower areas with low neutron flux. These areas are not of interest for the Nuclide Activation System due to the low neutron flux. Therefore, Nuclide Activation Systems as described in WO 2016/173664 A1 are used wherein the lower areas are filled up with dummy targets so that the irradiation targets are located in areas with higher neutron flux due to the separately formed dummy targets inserted in the beginning. This ensures that the (converted) instrumentation tubes of the nuclear monitoring system are generally still capable for the nuclear monitoring system while ensuring efficient activation of the respective irradiation targets due to their higher position.

The current Nuclide Activation Systems using dummy targets require a complex ejection process via a magnetic target removal system. Due to the magnetic target removal system, it is not possible to use magnetic targets as irradiation targets in an economical manner as the respective magnetic target removal system cannot be applied.

In addition, the current Nuclide Activation System is connected to the nuclear monitoring system, for instance AMS or rather TIP System. The connection of both systems, namely the Nuclide Activation System and the nuclear monitoring system, requires a complex control system for controlling both systems simultaneously.

### SUMMARY OF THE INVENTION

It is an object to provide a possibility to establish a nuclide activation system within a nuclear reactor in an effective and efficient manner, in particular in an European Pressurized Water Reactor.

The present invention provides a lance unit for usage in a nuclear reactor core, comprising a nuclide activation system, a nuclear monitoring system, a tube system and a yoke holding the tube system. The nuclear monitoring system has at least one nuclear monitoring tube for accommodating monitoring members that monitor the nuclear reactor core. The nuclide activation system has a nuclide activation tube for accommodating at least one irradiation target to be exposed to neutron flux in the nuclear reactor to form a radionuclide. The at least one nuclear monitoring tube and the nuclide activation tube are part of the tube system. The nuclide activation tube has an internal stop configured to stop the at least one irradiation target, wherein the internal stop of the nuclide activation tube is located at a different height with regard to the lower end of the nuclear monitoring tube.

Accordingly, a lance unit is provided that has a tube system comprising at least one nuclear monitoring tube, for instance several nuclear monitoring tubes, and one nuclide activation tube. The nuclide activation tube ensures that the at least one irradiation target is located at the intended position in the nuclide activation tube so as to be exposed to a desired neutron flux (density). In contrast thereto, the at least one nuclear monitoring tube ensures that the nuclear reactor core can be monitored appropriately. Thus, at least two tubes are provided, each having its dedicated function. In fact, separate tubes are provided so that the nuclear monitoring system is not impaired by the nuclide activation system since at least one separately formed nuclide activation tube is provided. The at least two tubes belong to the tube system that is held by the common yoke of the lance unit. Therefore, no modification with regard to the reactor core are necessary. In fact, the already available space of current lance units used in EPR nuclide reactors is sufficient so that the nuclear monitoring capability is not limited by the additional nuclide activation system. In fact, the present invention aims at an easy and cost-efficient way to produce radionuclides in a nuclear reactor. In fact, several nuclear monitoring tubes may be provided for monitoring the nuclear reactor core.

The nuclear monitoring tube typically runs through the entire core of the nuclear reactor so that the entire core can be monitored. However, the lower areas assigned to the bottom of the core have a lower neutron flux density so that these areas are of minor interest for nuclide activation. Therefore, the internal stop is provided in the nuclide activation tube which ensures that the at least one irradiation target is stopped at a position being exposed to a higher neutron flux density compared with the lower end of the nuclear monitoring tube.

Thus, the efficiency of the nuclide activation system is not reduced compared to the known concepts since the nuclide activation tube has the internal stop that is located at a different height with regard to the lower end of the nuclear monitoring tube. Put it another way, the active length of the nuclide activation tube, namely the usable length of the inner space of the nuclide activation tube, is shorter than the one of the nuclear monitoring tube. This is ensured by the stop being an internal one so as to restrict the internal space within the nuclide activation tube.

Accordingly, the irradiation targets can be positioned in upper areas of the nuclear reactor core that are exposed to a higher neutron flux density.

In other words, the lowest irradiation target inserted into the nuclide activation tube is located higher than the lower end of the nuclear monitoring tube.

Further, the first irradiation target inserted into the nuclide activation tube is the first object inserted after the lance unit was installed as no dummy targets are used. In fact, the internal stop stops the irradiation target.

Furthermore, the overall handling is simplified since no magnetic dummy targets are used so that the irradiation targets can be removed from the nuclide activation tubes easily. In other words, the magnetic target removal system used before is no more required for sorting irradiated targets and dummy targets having different magnetic properties. Accordingly, the irradiation targets may be magnetic or not as no restrictions in this regard are provided.

In fact, the nuclide activation tube can be formed differently with respect to the nuclear monitoring tube with regard to the material and/or size, for instance length and/or diameter.

The common yoke that holds the tube system comprising both types of tubes, namely the nuclear monitoring tube and the nuclide activation tube, ensures that a single lance unit is provided which can be used for both nuclide activation and nuclear monitoring of the core.

Generally, it is contemplated that a commercial nuclear reactor which main purpose is the generation of electrical power can be used for producing radionuclides. In particular, existing or planned nuclear monitoring systems such as aeroball measuring systems (AMS), Transversing Incore Probe (TIP) systems or other tube systems of such commercial reactors can be modified and/or supplemented to enable an effective and efficient production of radionuclides.

According to the invention, the typical lance units holding the tube system are adapted so as to additionally hold the nuclide activation tubes that are used to guide the irradiation targets into the reactor core, in particular to a predefined axial position, and to lead the irradiation targets out of the reactor core after complete activation of the parent material of the irradiation target. The activation of the targets is optimized by positioning the irradiation targets in predetermined areas of the reactor core having a neutron flux sufficient for converting the parent material completely into the desired radionuclide. The proper positioning of the irradiation targets is achieved by means of the internal stop of the nuclide activation tube being different in height with regard to the lower end of the nuclear monitoring tube passing through the entire nuclear reactor core.

It is to be noted that the height refers to the height in the installation position of the lance unit within the nuclear reactor, in particular its core.

Generally, the internal stop is configured to stop the at least one irradiation target accommodated by the nuclide activation tube in a certain position. In other words, the internal stop may limit the internal volume of the nuclide activation tube. Thus, the internal stop may correspond to an internal end stop.

Since the at least one irradiation target accommodated in the nuclide activation tube may be spherical or a ball, the respective internal stop may correspond to a ball stop.

According to an aspect, the internal stop is a mechanical stop and/or a fixed stop. Thus, the respective stop cannot be moved or altered once the lance unit is installed in the nuclear reactor core. The first irradiation target inserted abuts the mechanical and/or fixed stop so that the irradiation target inserted is stopped by the mechanical and/or fixed stop. Thus, the stop corresponds to an immovable stop in the interior of the nuclide activation tube.

Another aspect provides that the nuclide activation system is configured to permit insertion and removal of the at least one irradiation target into the nuclide activation tube during operation of the nuclear reactor core. The lance unit does not have to be removed from the nuclear reactor core for inserting and/or removing the at least one irradiation target so that the activation of the irradiation target may be done in short term. In fact, the at least one irradiation target can be removed and/or inserted suddenly, namely during operation of the nuclear reactor core.

According to an embodiment, three nuclear monitoring tubes are provided. This ensures that the entire nuclear monitoring system of the nuclear reactor core is not impaired by the nuclide activation system. The respective lance unit has three nuclear monitoring tubes which is sufficient for a proper working nuclear monitoring system. In additional, the lance unit comprises the additional nuclide activation tube so that the tube system assigned to the lance unit comprises four tubes in total.

An embodiment provides that the nuclide activation tube is coated with or made of a neutron doubling material, in particular beryllium. The activation of the irradiation targets accommodated in the nuclide activation tube(s) is improved due to the neutron doubling material so that the overall efficiency is increased.

For instance, the internal stop is provided by the axial end of the nuclide activation tube. The internal stop is provided by the external end of the nuclide activation tube. In fact, the axial end of the nuclide activation tube is a mechanical and fixed stop. Accordingly, the outer length of the nuclide activation tube is shorter than the one of the nuclear monitoring tube that passes through the nuclear reactor core.

Alternatively or additionally, the internal stop may be a mechanical stop that is inserted into the nuclide activation tube. Thus, the internal stop can be formed separately, for instance as a disk and/or a plate, wherein the stop is inserted into the nuclide activation tube at a certain location prior to the installation of the lance unit within the nuclear reactor core. Thus, the active length of the nuclide activation tube is reduced internally, namely the usable length of the inner space of the nuclide activation tube. For instance, the nuclide activation tube itself may have the same (outer) length as the nuclear monitoring tube. However, the active length of the nuclide activation tube is shorter than the one of the nuclear monitoring tube due to the internal stop inserted.

The irradiation targets may be inserted into the nuclide activation tube of the tube system in the core of the nuclear reactor. The tube system may comprise a discharge tube which is connected to the lance unit and which is located outside the nuclear reactor core. More preferably, the discharge tube has an outlet coupled to a storage container for receiving one of the irradiation targets removed from the tube system through the discharge tube.

Further, the invention provides a nuclide activation and nuclear monitoring system for usage in a nuclear reactor core, the nuclide activation and nuclear monitoring system comprising at least one lance unit as described above. The nuclide activation and nuclear monitoring system may comprise several lance units each having one nuclide activation tube for receiving irradiation targets.

For instance, the nuclear reactor comprises twelve lance units which may be of different types. At least one of these lance units is used by the nuclide activation and nuclear monitoring system.

An irradiation target drive system may be provided that is connected with the nuclide activation tube, wherein the irradiation target drive system is configured to insert the at least one irradiation target into the nuclide activation tube and to remove the at least one irradiation target from the nuclide activation tube. The target drive system is provided for driving the irradiation targets so that the irradiation targets may be inserted and removed during operation of the nuclear reactor without the need of removing the lance unit that comprises the nuclide activation tube.

Therefore, the target drive system is established as a target insertion system and a target removal system simultaneously so that the target drive system is configured to insert or rather to remove the irradiation targets from the tube system, in particular the nuclide activation tube(s).

The target drive system may be pneumatically operated allowing for a fast processing of the irradiation targets using a pressurized gas such as nitrogen or air. Accordingly, the target drive system is in fluid communication with the nuclide activation tube.

Particularly, the irradiation target drive system comprises a (pressurized) gas source, for instance a (pressurized) air source or a (pressurized) nitrogen source, in particular wherein the gas source is a nuclide activation gas source that is assigned to the irradiation target drive system solely or wherein the gas source is a common gas source assigned to a valve battery. The (pressurized) gas is used at least for driving the irradiation targets within the tube system, in particular the nuclide activation tube(s).

Moreover, the common gas source may be used for driving the monitoring members within the nuclear monitoring tube as well. The common gas source may be connected to two target drive systems assigned to an irradiation target drive system and a monitoring member drive system.

Alternatively, a common drive system may be provided.

For instance, the (common) drive system comprises one or more pneumatically operated valve batteries.

In addition, at least one control unit may be provided that is configured to control the nuclide activation system and/or the nuclear monitoring system, in particular wherein the at least one control unit is configured to control the nuclide activation system and the nuclear monitoring system separately. As already mentioned with regard to the lance unit, the nuclide activation system and the nuclear monitoring system are established separately from each other so that the respective controlling can be done in a separate manner. Put it another way, the nuclide activation system does not influence the nuclear monitoring system so that no (mechanical and/or control) interlock is necessary. Hence, both systems do not influence each other. In fact, the overall controlling and signaling can be simplified appropriately.

In fact, the controlling can be done via the drive system(s) and/or the valve battery.

For instance, the valve batteries are controlled by the control unit so that the insertion and transport of the irradiation targets in the tube system is controlled via the valve batteries.

The nuclear monitoring system for determining the neutron flux in the core and the nuclide activation system can be controlled separately. The control unit is configured such that operation of the valves of the drive system(s) is at least partly automated to achieve a safe and reliable operation of the drive system(s).

In general, the nuclide activation and nuclear monitoring system may comprise a tube system, for instance a tube system of a nuclear reactor, namely a nuclear monitoring system.

Hence, the nuclide activation and nuclear monitoring system comprises at least one nuclear monitoring tube passing through the core of the nuclear reactor as well as the nuclide activation tube for accommodating irradiation targets. In contrast to the nuclide activation tube, the nuclear monitoring tube is configured to accommodate monitoring members. The respective nuclear monitoring tube and the nuclide activation tube may be provided by a lance unit, for instance the lance unit as described above. The tube system is generally configured to permit insertion and removal of irradiation targets into the nuclide activation tube.

The nuclide activation and nuclear monitoring system, comprising the target drive system, a nuclide activation system, a nuclear monitoring system, and a control unit linked to each other, is configured to calculate an optimum irradiation time for the irradiation targets based on the actual state of the nuclear reactor as provided by the nuclear monitoring system.

Further, the invention provides a method of producing radionuclides from irradiation targets in a nuclear reactor, comprising the steps of:
- providing at least one tube system including a nuclear monitoring tube passing through a core of the nuclear reactor and a nuclide activation tube with an internal stop that is located at a different height with regard to the lower end of the nuclear monitoring tube;
- inserting at least one irradiation target into the nuclide activation tube and activating the irradiation target by exposing the irradiation target to neutron flux in the nuclear reactor core to form a radionuclide; and
- retrieving the irradiation target from the nuclide activation tube;
wherein the irradiation target is held by the internal stop at a predetermined axial position in the reactor core, said axial position corresponding to a pre-calculated neutron flux density sufficient for converting the irradiation target to the radionuclide.

The irradiation target inserted firstly abuts on the internal stop so that the irradiation target is located at predetermined and desired position, in particular with regard to the neutron flux density.

Generally, the irradiation targets and/or the monitoring members may have a round shape, preferably a spherical shape, so that the targets are able to roll and can easily be processed in the tube system, in particular the nuclide activation tube(s) and/or the nuclear monitoring tube(s), using pressurized gas such as air or nitrogen.

The nuclide activation system, the nuclear monitoring system and the control unit may be configured such that the irradiation process for converting the irradiation target to the radionuclide is optimized by considering the actual state of the reactor, especially the current neutron flux, fuel burn-up, reactor power and/or loading. Thus, an optimum irradiation time can be calculated for optimum results. It is however not important which component performs the actual calculation.

The optimum axial position of the irradiation targets is ensured by the internal stop of the nuclide activation tube which was defined in advance according to information gathered previously, data retrieved from other nuclear reactors of the same type and/or modelling.

Accordingly, a respective nuclide activation tube was inserted in the lance unit or rather the internal stop was fixed appropriately.

Preferably, the information provided by the nuclear monitoring system to the control unit includes at least one of the following: neutron flux (from ex- or in-core detectors), activation values from an existing ball measuring system, burn-up, reactor power, loading, rod position(s), flow rate, inlet- temperature, pressure, and time synchronization. The more information about the reactor is considered as input data, the more accurate will be the results of the calculation of the optimum irradiation time. The before mentioned parameters may include real-time values and any derivatives, like developments overtime.

The control unit may be advantageously configured to automatically control the pressure in the tube system, in particular after each insertion of irradiation targets by the target drive system.

In a preferred embodiment, the tube system penetrates a pressure vessel cover of the nuclear reactor, and the irradiation targets are inserted into the nuclide activation tube from the top of the nuclear reactor core through the pressure vessel cover.

The irradiation targets are activated in the nuclide activation tube for a period of time sufficient for complete conversion of the parent material of the irradiation targets to the desired radionuclide, as determined by the online nuclide monitoring system and the control unit. The time to achieve complete conversion of the parent material will depend on the reactor type and status, neutron flux conditions, type of parent material and various other parameters known to a person skilled in the art, and may range from several hours to days, preferably 1 to 10 days. Complete conversion means a conversion rate of the parent material providing a radionuclide content suitable for medical or industrial application of the irradiation targets.

After activation, the irradiation targets are preferably transferred out of the nuclide activation tube, for instance into the discharge tube, more preferably using pressurized gas, by preserving the linear order of irradiation targets.

The invention thus provides a fast and effective method to completely activate the irradiation targets in the nuclide activation tube(s) during normal reactor operation, wherein no magnetic separating system is required for sorting the irradiation targets and dummy targets since specific nuclide activation tubes are provided in addition to the nuclear monitoring tubes. The handling is simplified accordingly.

Accordingly, the nuclear monitoring system and the additional nuclide activation system are completely independent from each other, in particular with regard to the drive system and/or the controlling. Hence, the nuclear monitoring system is not impaired by the additional nuclide activation system.

### BRIEF DESCRIPTION OF THE DRAWINGS

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic sketch of a nuclear reactor with a nuclide activation and nuclear monitoring system according to the invention
- Figure 2 shows a schematic top view on a nuclear reactor core having a nuclide activation and nuclear monitoring system according to the invention,
- Figure 3 shows a sectional view of the nuclear reactor core of Figure 2,
- Figure 4 shows a schematic view of a lance unit according to a first embodiment of the invention that is used by the nuclide activation and nuclear monitoring system shown in Figures 2 and 3,
- Figure 5a shows a schematic view of a lance unit according to a second embodiment of the invention that is used by the nuclide activation and nuclear monitoring system shown in Figures 2 and 3,
- Figure 5b shows a schematic sectional view of a nuclide activation tube of the lance unit shown in Figure 5a, and
- Figures 6a to 6b show top views on different embodiments of lance units according to the invention.

### DETAILED DESCRIPTION

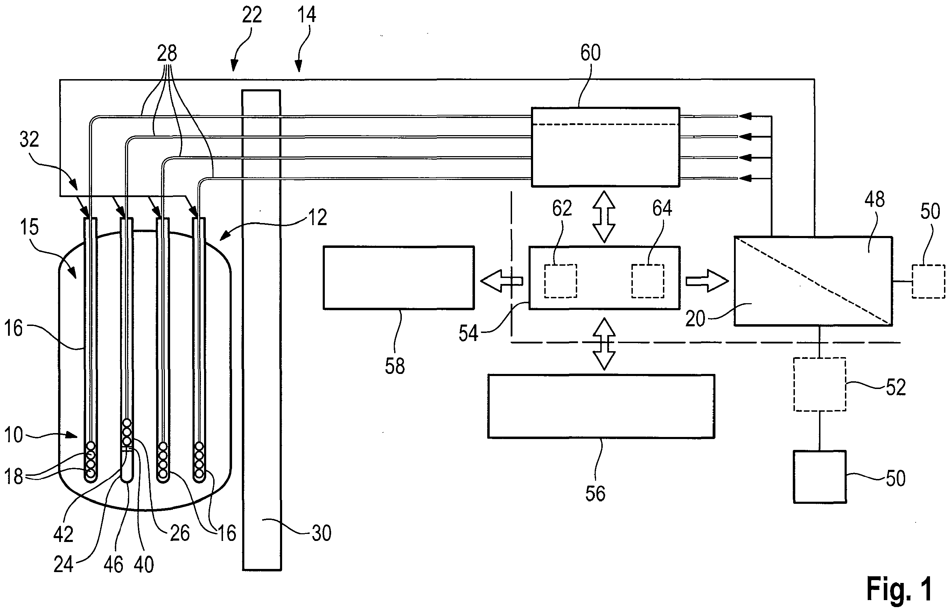

In Figure 1, a basic setup of a nuclide activation and nuclear monitoring system 10 within a commercial nuclear reactor 12 is shown, in particular a power plant with an EPR^{™} nuclear reactor.

As opposed to a research reactor, the purpose of a commercial nuclear reactor 12 is the production of electrical power. Commercial nuclear reactors typically have a power rating of 300+ Megawatt electric.

The basis of the nuclide activation and nuclear monitoring system 10 described in the example embodiments is derived from a nuclear monitoring system 14, for instance an aeroball measuring system (AMS) or a Traversing Incore Probe (TIP) System, the main purpose of which is to measure the neutron flux density in the core 15 of the nuclear reactor 12.

For this purpose, the nuclear monitoring system 14 comprises at least one nuclear monitoring tube 16 that passes through the core 15 of the nuclear reactor 12. The nuclear monitoring tube 16 may accommodate a plurality of monitoring members 18, for instance aeroballs, arranged in a linear order thereby forming a monitoring members column.

The nuclear monitoring system 14 further includes a pneumatically operated drive system 20 configured to insert the monitoring members 18 into the nuclear monitoring tubes 16 extending into and passing the nuclear reactor core 15 through its entire axial length, and to remove the monitoring members 18 from the nuclear monitoring tubes 16 after activation for monitoring purposes. The monitoring members 18 are evaluated in a known manner

In the following, the major components of the nuclide activation and nuclear monitoring system 10, which are provided in addition to those of the nuclear monitoring system 14, will be further described.

Figure 1 also schematically shows that the nuclide activation and nuclear monitoring system 10 also comprises a nuclide activation system 22 that comprises at least one nuclide activation tube 24 which is formed in addition to the at least one nuclear monitoring tube 16 of the nuclear monitoring system 14.

The nuclide activation tube 24 is configured to permit insertion and removal of irradiation targets 26 that will be activated by the neutron flux within the core 15 as will be described later.

The irradiation targets 26 and/or the monitoring members 18 used by both systems 14, 22 may have a round or spherical shape and having a diameter corresponding to the clearance of the respective tubes 16, 24. For instance, the diameter of the irradiation targets 26 and/or the monitoring members 18 is in the range of between 1 to 3 mm, preferably about 1.7 mm.

The at least one nuclide activation tube 24 as well as the at least one monitoring tube 16 correspond to a tube system 28 that is assigned to the core 15 wherein the tube system 28 is also assigned to a tubing of the nuclear reactor 12 that penetrates a reactor confinement 30 and the pressure vessel cover of the nuclear reactor 12 as shown in Figure 1.

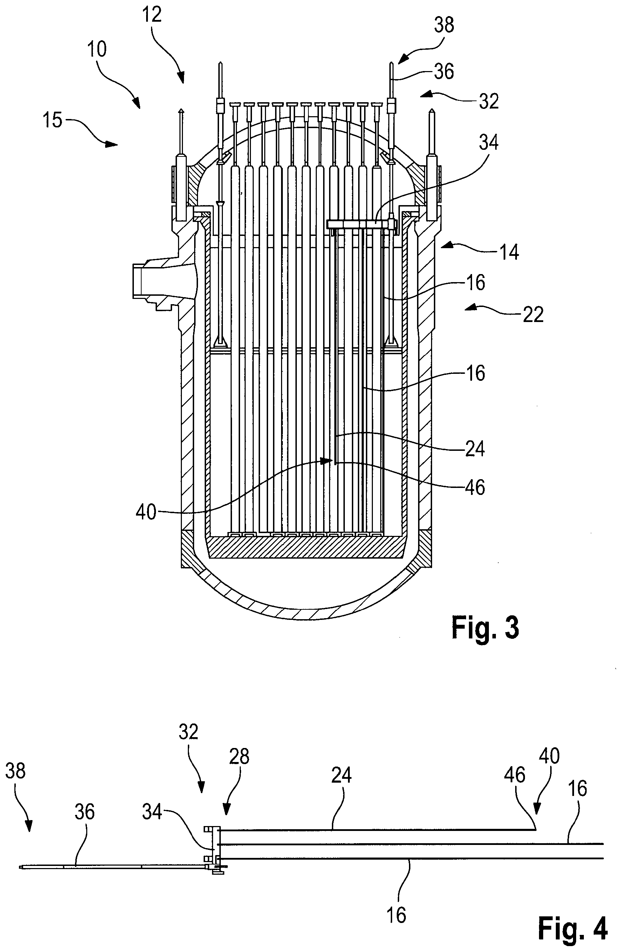

In fact, the tube system 28 is assigned to a lance unit 32 being part of the nuclide activation and nuclear monitoring system 10. Different embodiments of the lance unit 32 are shown in Figures 3 to 6 in more detail.

In general, the lance unit 32 comprises a yoke 34 that interconnects a lance head 36 and the respective tubes 16, 24, namely the at least one nuclear monitoring tube 16 and the at least one nuclide activation tube 24 forming the tube system 28. Thus, the tube system 28 is held by the yoke 34 in a mechanical manner.

The lance head 36 is assigned to a top end 38 of the lance unit 32 that is accessible from the outside when the lance unit 32 is installed in the core 15 as shown in Figure 3. In contrast thereto, the respective tubes 16, 24 each have a closed end that face the bottom of the core 15 when the lance unit 32 is installed in the core 15. This becomes also obvious from Figure 3.

As discussed above, the at least one nuclear monitoring tube 16 is configured to accommodate irradiation targets 26 that are exposed to an irradiation in the core 15 for producing radionuclides.

In general, the at least one nuclear monitoring tube 16 of the lance unit 32 has an internal stop 40 that stops the irradiation targets 26 to be irradiated at a certain location. In fact, the internal stop 40 is located at a different height compared to the lower end of the at least one nuclide activation tube 24 as shown in Figures 1, 3 to 5.

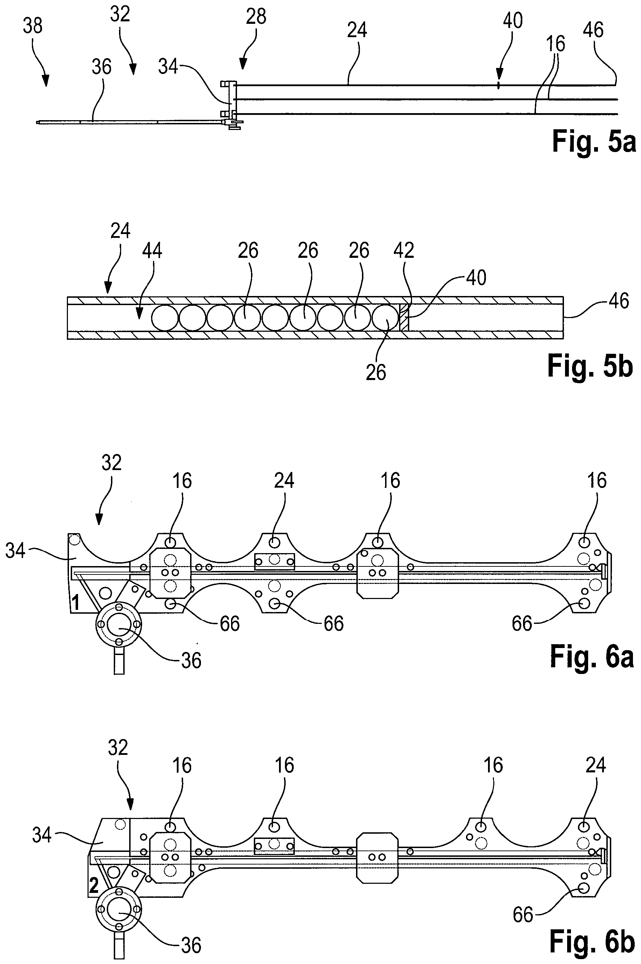

The internal stop 40 may be established by a mechanical stop 42 that is inserted in the nuclide activation tube 24 as shown in the embodiments of the lance units 32 in Figures 1 and 5.

The mechanical stop 42 may be formed by a disk and/or a plate that has been mechanically fixed to a certain location within the nuclide activation tube 24 (prior) to the installation of the complete lance unit 32 within the core 15.

The mechanical stop 42 ensures that the active length of the nuclide activation tube 24 is reduced, which may be called the usable length of the inner space 44 of the nuclide activation tube 24.

As shown in Figures 1 and 5a, the nuclide activation tube 24 itself has the same (outer) length as the nuclear monitoring tube 16. However, the active length, namely the inner length, of the nuclide activation tube 24 is shorter than the one of the nuclear monitoring tube 16 due to the internal stop 40 that has been inserted into the nuclide activation tube 24 in front of the closed end of the nuclide activation tube 24.

This ensures that the irradiation targets 26 inserted into the nuclide activation tube 24 are stopped by the internal stop 40 at a location being higher than the lower end of the nuclear monitoring tube 16 so that the first irradiation target 26, which corresponds to the overall first object inserted after the installation of the lance unit 32, is exposed by a higher neutron flux density compared to the location assigned to the lower end of the nuclear monitoring tube 16.

Therefore, the irradiation targets 26 are positioned in upper areas compared to the lower areas assigned to the nuclear monitoring tubes 16 as shown in Figure 1 so that the irradiation targets 26 are exposed to a higher neutron flux density compared to the lowest or rather first inserted monitoring members 18 since the nuclear monitoring tube 16 typically passes through the entire core 15 of the nuclear reactor 12 so that the entire core 15 can be monitored.

Alternatively to the separately formed disk-like stop 42, the internal stop 40 may be established by the axial end 46 of the nuclide activation tube 24 itself as shown in the embodiments of the lance units 32 in Figures 3 and 4.

Therefore, the internal stop 40 is simultaneously formed by the external end 46 of the nuclide activation tube 24. However, the length of nuclide activation tube 24 is reduced compared to the one of the nuclear monitoring tube 16 as shown in Figures 3 and 4. In other words, the outer length of the nuclide activation tube 24 is shorter than the one of the nuclear monitoring tube 16 that passes through the nuclear reactor core 15.

Generally, it is ensured that the first inserted irradiation target 28 is located in an area with a higher neutron flux density compared to the first inserted monitoring member 18.

For instance, the internal stop 40 may be located 60 cm higher than the lower end of the nuclear monitoring tube 16. Thus, the separately formed stop 42 may be located at a height of 60 cm with regard to the axial end 46 of the nuclide activation tube 24 having the same length as the nuclear monitoring tube 16 or the nuclide activation tube 24 is shorten by 60 cm compared to the nuclear monitoring tube 16.

In both embodiments, the internal stop 40 is a mechanical stop and a fixed stop since the separately formed stop 42 is positioned within the nuclide activation tube 24 and fixed in the respective position. Further, the first irradiation target 26 abuts the respective internal stop 40 in a mechanical manner.

Due to the inventive concept, the length of the respective nuclide activation tube 24 can be adapted to the desired axial position within the core 15 so as to expose the irradiation targets 26 to a desired neutron flux density. In a similar manner, the separately formed stop 42 is positioned at the desired axial position.

For improving the nuclide activation, the respective nuclide activation tubes 24 may be coated with or made of a neutron doubling material, in particular beryllium. Hence, the irradiation time can be reduced so that the efficiency is increased.

As already discussed, the nuclide activation and nuclear monitoring system 10 comprises a pneumatically operated drive system 20 for driving the monitoring members 18. However, this drive system 20 can also be used for driving the irradiation targets 26 into the nuclide activation tube(s) 24 in a predetermined linear order and to drive the irradiation targets 26 out of the nuclide activation tube(s) 24.

Therefore, the respective drive system 20 may be called (irradiation) target drive system.

Alternatively, two drive systems 20, 48 are provided. The first drive system 20 is configured to insert and/or remove the monitoring members 18 whereas the second drive system 48 is configured to insert and/or remove the irradiation targets 26. Hereinafter, a single drive system 20 will be described that is called irradiation target drive system 20 even though it is enabled to drive the monitoring members 18.

Preferably, the target drive system 20 is pneumatically operated allowing for a fast processing of the irradiation targets 26 and/or the monitoring members 14 using a pressurized gas such as nitrogen or air.

Accordingly, the target drive system 20 comprises a (pressurized) gas source 50, for instance a (pressurized) nitrogen source or a (pressurized) air source.

Since both systems, namely the nuclide activation system 22 and the nuclear monitoring system 14, are independent from each other with regard to their tubes 16, 24, two gas sources 50 may be provided (dashed lines) instead of a common gas source. Hence, one nuclide activation gas source 50 as well as one nuclear monitoring gas source 50 are provided which each solely interact with the respective drive system 20, 48.

Alternatively, a single common gas source 50 is provided that may be connected to a valve battery 52 (dashed lines) wherein the valve battery 52 is used as an additional pneumatic system for separate control of the two different drive systems 20, 48 if provided.

The valve battery 52 may be implemented as a further subsystem, for instance in addition to valve batteries of the nuclear monitoring system 14, or a separate drive system is installed.

The target drive system 20, 48 preferably comprises a target-filling device (not shown) for inserting the irradiation targets 26 into the nuclide activation tube(s) 24.

A (instrumentation and) control unit (ICU) 54 is linked to the target drive(s) 20, 48 as well as an online core monitoring system 56 for controlling activation of the irradiation targets 26, and a fault monitoring system 58.

The control unit 54 and/or the online core monitoring system 56 are configured to calculate an optimum irradiation time for the irradiation targets 26 based on the actual state of the nuclear reactor 12 as provided by the online core monitoring system 56.

The control unit 54 is connected via an interface with the adapted online core monitoring system 56 software. The control unit 54 is further connected to the mechanical components of the nuclide activation and nuclear monitoring system 10, including sensors.

With regard to the nuclide activation and nuclear monitoring system 10, in particular the nuclear monitoring system 14, several humidity sensors may be provided to detect any ingress of primary coolant (or any other liquid) into the nuclide activation and nuclear monitoring system 10. It is understood that the lance units 32, in particular their tubes 16, 24, are in direct contact with the primary cooling water surrounding the core 15 of the nuclear reactor 12. The humidity sensors may be based on spark plugs that are modified for measuring electrical resistance.

Further sensors are preferably provided for monitoring the presence and runtime of the irradiation targets 26 passing through the tube system 28, in particular the nuclide activation tubes 24. These sensors are preferably arranged at the tubes 24 penetrating the reactor core 15. Preferably, the sensors are used to monitor that all irradiation targets 26 have left the nuclide activation tubes 24 during the removal process while the targets 26 pass the sensors. For instance, activity sensors sensing the radiation of the irradiation targets 26 may be used.

The tube system 28 may be assigned to a discharge tube 60 which is connected to the lance unit 32 and which is located outside the nuclear reactor core 15. The irradiation targets 26 are removed from the tubing through the discharge tube 60.

The discharge tube may have an outlet coupled to a storage container for receiving the irradiation targets 26 removed from the tube system 28 through the discharge tube 60.

For an efficient generation of radionuclides, optimum irradiation conditions and time for the irradiation targets 26 are determined. Practically all relevant input data for this calculation are available from the online core monitoring system 56 of the nuclear monitoring system 56. The control unit 54, which is linked to the core monitoring system 56, can calculate the optimum irradiation time, as well as further parameters, like the amount of irradiation targets 26 in a nuclide activation tube 24 defining the actual length of the respective target column and the positions of the individual irradiation targets 26.

The online calculation of the optimum irradiation time of the irradiation targets 26 is not simply based on the assumption of an estimated constant neutron flux, but rather takes the actual state of the reactor 12 into account, especially at least one of the following parameters: neutron flux, activation values from an existing ball measuring system, burn-up, reactor power, loading, rod position(s), flow rate, inlet-temperature, pressure, and time synchronization. Not only real-time values of these parameters, but also their development over time may be considered.

In general, the nuclide activation and nuclear monitoring system 10 provides separately formed nuclear monitoring tubes 16 and nuclide activation tubes 24 relating to the nuclear monitoring system 14 and the nuclide activation system 22, respectively.

The respective tubes 16, 24 are separately formed as well as separately controlled, in particular with regard to the control unit 54 and the drive system(s) 20, 48.

In fact, the nuclear monitoring system 14 and the nuclide activation system 22 may be operated pneumatically independently from each due to the separate gas sources 50 and/or the valve battery 52.

Since the controlling may also be done separately, the control unit 54 may have two control modules 62, 64 wherein the first control module 62 is configured to control the nuclear monitoring system 14 whereas the second control module 64 is configured to control the nuclide activation system 22.

For instance, the control modules 62, 64 may be located in different rooms so that accessibility is simplified. Particularly, the second control module 64 may be located on the other side of the containment 30.

In the shown embodiments of the lance units 32, in particular Figures 6, it is shown that each lance unit 32 has three nuclear monitoring tubes 16 assigned to the tube system 28 of the lance unit 32 that further comprises one nuclide activation tube 24. In addition, each lance unit 32 has at least one emergency coolant injection tube 66.

Each of the tubes 16, 24 may have two pipes so that pressurized gas can be pumped in two different directions for driving the respective monitoring members 18 and/or the irradiation targets 26.

In general, the nuclide activation system 22 does not impair the nuclear monitoring system 14 since no nuclear monitoring tube 16 has to be converted into a nuclide activation tube 24. In fact, the space already provided by the lance unit 32 was only used to add the nuclide activation tube 24.

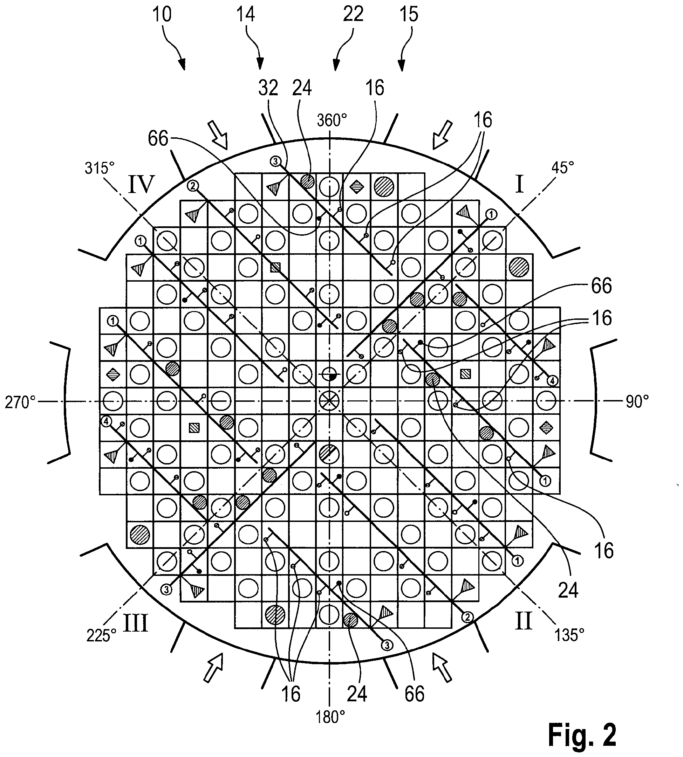

Figure 2 schematically depicts a diagram providing information on the equipment of the reactor core 15 with lance units 32 and their distribution within the core 15 of the nuclear reactor 12, in particular the nuclide activation tubes 24, the nuclear monitoring tubes 16 as well as the emergency coolant injection tubes.

According to the example shown in Figure 2, twelve lance units 32 are used wherein four different types of lance units 32 are shown indicated by numbers 1 to 4.

In fact, no positions are taken from a conventional nuclear monitoring system 14 as the space already available is used by the nuclide activation system 22, in particular the respective nuclide activation tubes 24.

Therefore, the nuclide activation tubes 24 forming the nuclide activation system 22 in parts can be incorporated without impairing the nuclear monitoring system 22 by converting nuclear monitoring tubes 16 into nuclide activation tubes 24. Accordingly, the number of nuclear monitoring tubes 16 is not reduced due to the nuclide activation system 22.

The radionuclides may be produced from the irradiation targets 26 within the nuclear reactor 12 as follows:
At least one tube system 28 is provided that includes a nuclear monitoring tube 16 passing through the core 15 of the nuclear reactor 12 and the nuclide activation tube 24 with the internal stop 40 that is located at a different height with regard to the lower end of the nuclear monitoring tube 16 as already described.

Then, at least one irradiation target 26 is inserted into the nuclide activation tube 24. The irradiation target 26 is held by the internal stop 40 at a predetermined axial position in the reactor core 15. The axial position corresponds to a pre-calculated neutron flux density sufficient for converting the irradiation target 26 to the radionuclide.

The irradiation target 26 is activated by exposing the irradiation target 26 to neutron flux in the nuclear reactor core 15 to form the radionuclide.

Afterwards, the irradiation target 26 is retrieved from the nuclide activation tube 24.

Generally, the irradiation targets 26 comprise a suitable parent material for generating radionuclides which are to be used for medical and/or other purposes.

More preferably, the irradiation targets 26 consist of the parent material which converts to a desired radionuclide upon activating by exposure to neutron flux present in the core 15 of an operating commercial nuclear reactor 12. Useful parent materials are Mo98 and Yb176 which are converted to Mo99 and Lu177, respectively. It is understood, however, that the invention is not limited to the use of a specific parent material.

## Claims

1. A lance unit (32) for usage in a nuclear reactor core (15), comprising a nuclide activation system (22), a nuclear monitoring system (14), a tube system (28) and a yoke (34) holding the tube system (28), wherein the nuclear monitoring system (14) has at least one nuclear monitoring tube (16) for accommodating monitoring members (18) that monitor the nuclear reactor core (15), wherein the nuclide activation system (22) has a nuclide activation tube (24) for accommodating at least one irradiation target (26) to be exposed to neutron flux in the nuclear reactor (12) to form a radionuclide, wherein the at least one nuclear monitoring tube (16) and the nuclide activation tube (24) are part of the tube system (28), wherein the nuclide activation tube (24) has an internal stop (40) configured to stop the at least one irradiation target (26),
**characterised in that**
the internal stop (40) of the nuclide activation tube (24) is located at a different height with regard to the lower end of the nuclear monitoring tube (16).

2. The lance unit (32) of claim 1, wherein the internal stop (40) is a mechanical stop and/or a fixed stop.

3. The lance unit (32) of claim 1 or 2, wherein the nuclide activation system (22) is configured to permit insertion and removal of the at least one irradiation target (26) into the nuclide activation tube (24) during operation of the nuclear reactor core (15).

4. The lance unit (32) of any of the preceding claims, wherein three nuclear monitoring tubes (24) are provided.

5. The lance unit (32) of any of the preceding claims, wherein the nuclide activation tube (24) is coated with or made of a neutron doubling material, in particular beryllium.

6. The lance unit (32) of any of the preceding claims, wherein the internal stop (40) is provided by the axial end (46) of the nuclide activation tube (24).

7. The lance unit (32) of any of the preceding claims, wherein the internal stop (40) is a mechanical stop (42) that is inserted in the nuclide activation tube (24).

8. A nuclide activation and nuclear monitoring system (10) for usage in a nuclear reactor core (15), comprising at least one lance unit (32) according to any of the preceding claims.

9. The nuclide activation and nuclear monitoring system (10) of claim 8, wherein an irradiation target drive system (20, 48) is provided that is connected with the nuclide activation tube (24), wherein the irradiation target drive system (20, 48) is configured to insert the at least one irradiation target (26) into the nuclide activation tube (24) and to remove the at least one irradiation target (26) from the nuclide activation tube (24).

10. The nuclide activation and nuclear monitoring system (10) of claim 9, wherein the irradiation target drive system (20, 48) comprises a gas source (50), in particular wherein the gas source is a nuclide activation gas source that is assigned to the irradiation target drive system (20, 48) solely or wherein the gas source (50) is a common gas source assigned to a valve battery (52).

11. The nuclide activation and nuclear monitoring system (10) of any of the claims 8 to 10, wherein at least one control unit (54) is provided that is configured to control the nuclide activation system (22) and/or the nuclear monitoring system (14), in particular wherein the at least one control unit (54) is configured to control the nuclide activation system (22) and the nuclear monitoring system (14) separately.

12. A method of producing radionuclides from irradiation targets (26) in a nuclear reactor (12), comprising the steps of:
- providing at least one tube system (28) including a nuclear monitoring tube (16) passing through a core (15) of the nuclear reactor (12) and a nuclide activation tube (24) with an internal stop (40) that is located at a different height with regard to the lower end of the nuclear monitoring tube (16);
- inserting at least one irradiation target (26) into the nuclide activation tube (24) and activating the irradiation target (26) by exposing the irradiation target (26) to neutron flux in the nuclear reactor core (15) to form a radionuclide; and
- retrieving the irradiation target (26) from the nuclide activation tube (24);
wherein the irradiation target (26) is held by the internal stop (40) at a predetermined axial position in the reactor core (15), said axial position corresponding to a pre-calculated neutron flux density sufficient for converting the irradiation target (26) to the radionuclide.

## Patentansprüche

1. Lanzeneinheit (32) zur Verwendung in einem Atomreaktorkern (15), umfassend ein Nuklidaktivierungssystem (22), ein Kernüberwachungssystem (14), ein Rohrsystem (28) und einen Bügel (34), der das Rohrsystem (28) hält, wobei das Kernüberwachungssystem (14) mindestens ein Kernüberwachungsrohr (16) zum Aufnehmen von Überwachungselementen (18) aufweist, die den Atomreaktorkern (15) überwachen, wobei das Nuklidaktivierungssystem (22) ein Nuklidaktivierungsrohr (24) zum Aufnehmen mindestens eines Bestrahlungsziels (26) aufweist, das in dem Atomreaktor (12) einem Neutronenfluss ausgesetzt werden soll, um ein Radionuklid zu bilden, wobei das mindestens eine nukleare Überwachungsrohr (16) und das Nuklidaktivierungsrohr (24) Teil des Rohrsystems (28) sind, wobei das Nuklidaktivierungsrohr (24) einen inneren Anschlag (40) aufweist, der konfiguriert ist, um das mindestens eine Bestrahlungsziel (26) anzuhalten, **dadurch gekennzeichnet, dass** der innere Anschlag (40) des Nuklidaktivierungsrohrs (24) auf einer unterschiedlichen Höhe in Bezug auf das untere Ende des nuklearen Überwachungsrohrs (16) angeordnet ist.

2. Lanzeneinheit (32) nach Anspruch 1, wobei der innere Anschlag (40) ein mechanischer Anschlag und/oder ein fester Anschlag ist.

3. Lanzeneinheit (32) nach Anspruch 1 oder 2, wobei das Nuklidaktivierungssystem (22) konfiguriert ist, um das Einsetzen und Entfernen des mindestens einen Bestrahlungsziels (26) in das Nuklidaktivierungsrohr (24) während eines Betriebs des Atomreaktorkerns (15) zu ermöglichen.

4. Lanzeneinheit (32) nach einem der vorherigen Ansprüche, wobei drei nukleare Überwachungsrohre (24) bereitgestellt sind.

5. Lanzeneinheit (32) nach einem der vorherigen Ansprüche, wobei das Nuklidaktivierungsrohr (24) mit einem Neutronenverdopplungsmaterial, insbesondere Beryllium, beschichtet ist oder daraus besteht.

6. Lanzeneinheit (32) nach einem der vorherigen Ansprüche, wobei der innere Anschlag (40) durch das axiale Ende (46) des Nuklidaktivierungsrohrs (24) gebildet ist.

7. Lanzeneinheit (32) nach einem der vorherigen Ansprüche, wobei der innere Anschlag (40) ein mechanischer Anschlag (42) ist, der in das Nuklidaktivierungsrohr (24) eingesetzt ist.

8. Nuklidaktivierungs- und nukleares Überwachungssystem (10) zur Verwendung in einem Atomreaktorkern (15), umfassend mindestens eine Lanzeneinheit (32) nach einem der vorherigen Ansprüche.

9. Nuklidaktivierungs- und nukleares Überwachungssystem (10) nach Anspruch 8, wobei ein Bestrahlungsziel-Antriebssystem (20, 48) bereitgestellt ist, das mit dem Nuklidaktivierungsrohr (24) verbunden ist, wobei das Bestrahlungsziel-Antriebssystem (20, 48) konfiguriert ist, um das mindestens eine Bestrahlungsziel (26) in das Nuklidaktivierungsrohr (24) einzusetzen und das mindestens eine Bestrahlungsziel (26) aus dem Nuklidaktivierungsrohr (24) zu entfernen.

10. Nuklidaktivierungs- und nukleares Überwachungssystem (10) nach Anspruch 9, wobei das Bestrahlungsziel-Antriebssystem (20, 48) eine Gasquelle (50) umfasst, insbesondere wobei die Gasquelle eine Nuklidaktivierungs-Gasquelle ist, die ausschließlich dem Bestrahlungsziel-Antriebssystem (20, 48) zugeordnet ist oder wobei die Gasquelle (50) eine gemeinsame Gasquelle ist, die einer Ventilgruppe (52) zugeordnet ist.

11. Nuklidaktivierungs- und nukleares Überwachungssystem (10) nach einem der Ansprüche 8 bis 10, wobei mindestens eine Steuereinheit (54) bereitgestellt ist, die zum Steuern des Nuklidaktivierungssystems (22) und/oder des nuklearen Überwachungssystems (14) konfiguriert ist, insbesondere wobei die mindestens eine Steuereinheit (54) konfiguriert ist, um das Nuklidaktivierungssystem (22) und das nukleare Überwachungssystem (14) separat zu steuern.

12. Verfahren zum Herstellen von Radionukliden aus Bestrahlungszielen (26) in einem Atomreaktor (12), umfassend die folgenden Schritte:
- Bereitstellen mindestens eines Rohrsystems (28), das ein nukleares Überwachungsrohr (16), das durch einen Kern (15) des Atomreaktors (12) verläuft, und ein Nuklidaktivierungsrohr (24) mit einem inneren Anschlag (40), der sich auf einer anderen Höhe als das untere Ende des Kernüberwachungsrohrs (16) befindet, aufweist;
- Einsetzen mindestens eines Bestrahlungsziels (26) in die Nuklidaktivierungsröhre (24) und Aktivieren des Bestrahlungsziels (26) durch Aussetzen des Bestrahlungsziels (26) einem Neutronenfluss in dem Kern des Atomreaktors (15), um ein Radionuklid zu bilden; und
- Entnehmen des Bestrahlungsziels (26) aus dem Nuklidaktivierungsrohr (24);
wobei das Bestrahlungsziel (26) durch den inneren Anschlag (40) an einer vorbestimmten axialen Position in dem Reaktorkern (15) gehalten wird, wobei die axiale Position einer vorausberechneten Neutronenflussdichte entspricht, die für ein Umwandeln des Bestrahlungsziels (26) in das Radionuklid ausreichend ist.

## Revendications

1. Unité lance (32) destinée à être utilisée dans un cœur de réacteur nucléaire (15), comprenant un système d'activation de nucléides (22), un système de surveillance nucléaire (14), un système de tubes (28) et un étrier (34) maintenant le système de tubes (28), dans laquelle le système de surveillance nucléaire (14) présente au moins un tube de surveillance nucléaire (16) permettant de recevoir des éléments de surveillance (18) qui surveillent le cœur de réacteur nucléaire (15), dans laquelle le système d'activation de nucléides (22) présente un tube d'activation de nucléides (24) permettant de recevoir au moins une cible d'irradiation (26) à exposer à un flux de neutrons dans le réacteur nucléaire (12) pour former un radionucléide, dans laquelle l'au moins un tube de surveillance nucléaire (16) et le tube d'activation de nucléides (24) font partie du système de tubes (28), dans laquelle le tube d'activation de nucléides (24) présente une butée interne (40) conçue pour arrêter l'au moins une cible d'irradiation (26), **caractérisée en ce que** la butée interne (40) du tube d'activation de nucléides (24) est située à une hauteur différente par rapport à l'extrémité inférieure du tube de surveillance nucléaire (16).

2. Unité lance (32) selon la revendication 1, dans laquelle la butée interne (40) est une butée mécanique et/ou une butée fixe.

3. Unité lance (32) selon la revendication 1 ou 2, dans laquelle le système d'activation de nucléides (22) est conçu pour permettre l'insertion et le retrait de l'au moins une cible d'irradiation (26) dans le tube d'activation de nucléides (24) pendant le fonctionnement du cœur de réacteur nucléaire (15).

4. Unité lance (32) selon l'une quelconque des revendications précédentes, dans laquelle trois tubes de surveillance nucléaire (24) sont prévus.

5. Unité lance (32) selon l'une quelconque des revendications précédentes, dans laquelle le tube d'activation de nucléides (24) est revêtu ou constitué d'un matériau doublant les neutrons, en particulier le béryllium.

6. Unité lance (32) selon l'une quelconque des revendications précédentes, dans laquelle la butée interne (40) est fournie par l'extrémité axiale (46) du tube d'activation de nucléides (24).

7. Unité lance (32) selon l'une quelconque des revendications précédentes, dans laquelle la butée interne (40) est une butée mécanique (42) qui est insérée dans le tube d'activation de nucléides (24).

8. Système d'activation de nucléides et de surveillance nucléaire (10) destiné à être utilisé dans un cœur de réacteur nucléaire (15), comprenant au moins une unité lance (32) selon l'une quelconque des revendications précédentes.

9. Système d'activation de nucléides et de surveillance nucléaire (10) selon la revendication 8, dans lequel on prévoit un système d'entraînement de cible d'irradiation (20, 48) qui est connecté au tube d'activation de nucléides (24), dans lequel le système d'entraînement de cible d'irradiation (20, 48) est conçu pour insérer l'au moins une cible d'irradiation (26) dans le tube d'activation de nucléides (24) et pour retirer l'au moins une cible d'irradiation (26) du tube d'activation de nucléides (24).

10. Système d'activation de nucléides et de surveillance nucléaire (10) selon la revendication 9, dans lequel le système d'entraînement de cible d'irradiation (20, 48) comprend une source de gaz (50), en particulier dans lequel la source de gaz est une source de gaz d'activation de nucléides qui est attribuée uniquement au système d'entraînement de cible d'irradiation (20, 48) ou dans lequel la source de gaz (50) est une source de gaz commune attribuée à une batterie de distributeurs (52).

11. Système d'activation de nucléides et de surveillance nucléaire (10) selon l'une quelconque des revendications 8 à 10, dans lequel on prévoit au moins une unité de commande (54) qui est conçue pour commander le système d'activation de nucléides (22) et/ou le système de surveillance nucléaire (14), en particulier dans lequel l'au moins une unité de commande (54) est conçue pour commander séparément le système d'activation de nucléides (22) et le système de surveillance nucléaire (14).

12. Procédé de production de radionucléides à partir de cibles d'irradiation (26) dans un réacteur nucléaire (12), comprenant les étapes suivantes :
- la fourniture d'au moins un système de tubes (28) comprenant un tube de surveillance nucléaire (16) traversant un cœur (15) du réacteur nucléaire (12) et un tube d'activation de nucléides (24) avec une butée interne (40) qui est situé à une hauteur différente par rapport à l'extrémité inférieure du tube de surveillance nucléaire (16) ;
- l'insertion d'au moins une cible d'irradiation (26) dans le tube d'activation de nucléides (24) et l'activation de la cible d'irradiation (26) en exposant la cible d'irradiation (26) à un flux de neutrons dans le cœur de réacteur nucléaire (15) pour former un radionucléide ; et
- la récupération de la cible d'irradiation (26) à partir du tube d'activation de nucléides (24) ;
dans lequel la cible d'irradiation (26) est maintenue par la butée interne (40) à une position axiale prédéterminée dans le cœur de réacteur (15), ladite position axiale correspondant à une densité de flux neutronique pré-calculée suffisante pour convertir la cible d'irradiation (26) en radionucléide.
